# EUROPEAN PATENT APPLICATION

(11) **EP 0 940 242 A1**
(43) Date of publication of application: **08.09.1999**
(21) Application number: 99104274.8
(22) Date of filing: 03.03.1999
(51) Int. Cl.: B29C 45/28

(54) **Fluid distributor duct**

(30) Priority: 03.03.1998 US 76612 P; 19.05.1998 US 81360
(71) Applicant: Dynisco Hotrunners Canada, Inc., Georgetown, Ontario L7G 4SI (CA)
(72) Inventor: Schmidt, Harald, Georgetown, Ontario L7G 4W1 (CA)
(74) Representative: Haimelin, Jukka Ilmari

(57) **Abstract**

In an injection molding machine, a distributor duct apparatus (10) for delivering a selected fluid to two or more separate, fluid driven cylinders (20) each of which is mounted on a heated manifold (30) and is interconnected to a valve pin (60) for effecting reciprocal movement of the valve pin (60) wherein the reciprocal movement of the valve pin (60) controls the flow of molten plastic being delivered through a nozzle which delivers molten plastic to a gate of a mold, the distributor duct apparatus (10) comprising: a distributor housing (10) mounted on an outside surface (25) of each of the cylinders (20), each of the cylinders (20) having a piston (80) slidably mounted within the bore (90) of an enclosed cylinder housing (20) for reciprocal fluid driven movement of the piston (80) within the bore (90) of the cylinder housing; the distributor housing (10) having at least two fluid flow channels (200,210), one channel (200) sealably communicating with a first fluid input/output port (203,204) to the bore (202) of each cylinder housing (20) and another channel (210) sealably communicating with a second fluid input/output port (213,214) to the bore (212) of each cylinder housing (20).

## Description

### Related Application

I claim, under 35 U.S.C § 119(e), the benefit of Provisional Application Serial No. 60/076,612, entitled, FLUID DISTRIBUTOR DUCT.

### BACKGROUND

The present invention relates to distributor ducts which deliver gaseous or liquid fluid to the fluid ports of a fluid powered mechanism, and more particularly, to a distributor duct for controlling the input and output under pressure of fluid to a plurality of pneumatic or hydraulic cylinders which are used to control the reciprocating movement of valve pins which control the flow of molten plastic into a mold in an injection molding machine/apparatus.

### SUMMARY OF THE INVENTION

The present invention comprises a distributor for delivering fluid to a plurality of fluid driven cylinders in an injection molding machine. The distributor is readily attachable to and detachable from the cylinders such that a scaled connection can be readily effected between fluid delivery channels provided in the distributor and fluid feed bores provided in the cylinders. The distributor is structurally independent of the cylinders which have self-contained fluid sealable piston bores and are spaced from the heated components of the machine.

The disclosure of copending U.S. Application Serial No. 08/972,277, for Apparatus For Controlling Plastic Melt Flow In Injection Molding Machines, filed November 18,1997 by the same inventor is incorporated herein by reference. This application claims the priority benefit of prior filed co-pending provisional application serial no. 60/076612 filed March 3, 1998. In accordance with the invention there is provided in an injection molding machine a distributor duct apparatus for delivering a selected fluid to two or separate, fluid driven cylinders each of which is mounted on a heated manifold and is interconnected to a valve pin for effecting reciprocal movement of the valve pin wherein the reciprocal movement of the valve pin controls the flow of molten plastic being delivered through a nozzle which delivers molten plastic to a gate of a mold, the distributor duct apparatus comprising a distributor housing mounted on an outside surface of each of the cylinders, each of the cylinders having a piston slidably mounted within the bore of an enclosed cylinder housing for reciprocal fluid driven movement of the piston within the bore of the cylinder housing; the distributor housing having at least two fluids flow channels, one channel salably communicating with a first fluid input/output port to the bore of each cylinder housing and another channel salably communicating with a second fluid input/output port to the bore of each cylinder housing.

The apparatus preferably includes a compressible member sandwiched between each channel and each fluid input/output port such that the communication between each channel and each fluid input/output port is fluid sealed.

Each cylinder preferably has a selected widened external mounting surface and the distributor duct housing has complementary selected widened external surface area for mating with the selected mounting surfaces of the cylinders.

The distributor housing is readily attachable to and detachable from each of the cylinders; and, the cylinders are mounted a spaced distance on and from an external surface of the heated manifold. Most preferably, the cylinders are interconnected to the valve pins at a position external to the bores of the enclosed cylinder housings.

Further in accordance with the invention there is provided in an injection molding machine, an apparatus for effecting reciprocal movement of valve pins which control molten plastic flow to a mold, the apparatus comprising: at least two cylinders mounted on a heated manifold for distributing the flow of molten plastic to the molds, each cylinder having a piston slidably mounted within a bore of an enclosed cylinder housing for reciprocal fluid driven movement of the piston within the bore of the cylinder housing, each piston being interconnected to a valve pin; a fluid sealed distributor housing mounted on an outside surface of each of the cylinders, the distributor housing having at least two fluid flow channels, one channel sealably communicating with a first fluid input/output port to the bore of each cylinder housing and another channel sealably communicating with a second fluid input/output port to the bore of each cylinder housing. Preferably, the distributor housing comprises a heat conductive material, the distributor duct housing being mounted on the cylinders such that the selected widened mounting surfaces of the cylinders are mated in compressed contact with the complementary selected widened surface areas of the distributor housing, heat being readily conductible from the cylinders to the distributor duct housing through the mated surfaces.

### BRIEF DESCRIPTION OF THE DRAWINGS

Fig. 1 is a cross-sectional view of a typical prior cylinder/fluid distributor arrangement in which a specially machined, custom plate functions as a structural component of an injection molding machine and as a mechanism by which the top end of the bores of a series of cylinders are fluid sealed/enclosed;
Fig. 2 is a cross-sectional view of a portion of an injection molding machine showing, according to the invention, an arrangement of fluid driven cylinders ad a distributor duct for the cylinders mounted on a manifold for distributing molten plastic flow to a series of nozzles;
Fig. 3 is a top view of the Fig. 2 apparatus along lines 3-3 in Fig. 2;
Fig. 4 is a cross-sectional view along lines 4-4 of the Fig. 2 apparatus;
Fig. 5 is a perspective exploded view of one of the cylinders and an associated portion of the distributor duct shown in the Figs. 2-4 apparatus;
Fig. 6 is a perspective, assembled view of a cylinder and an associated portion of another embodiment of a distributor duct for the cylinders;
Fig. 7 is a top, perspective view of a modular-type embodiment of a distributor duct according to the invention showing an arrangement together with a plurality of associated of cylinders.

### DETAILED DESCRIPTION OF THE INVENTION

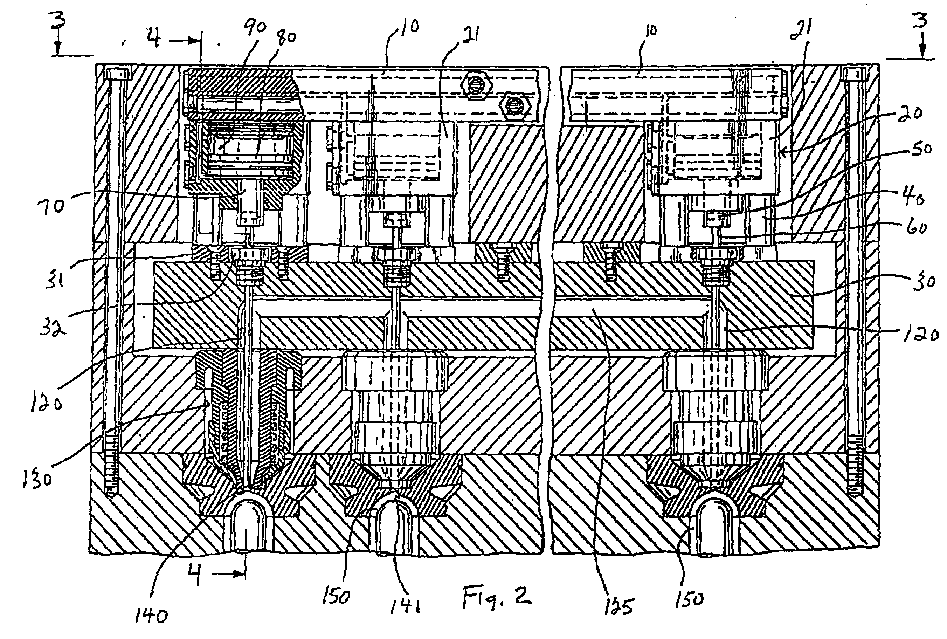

Shown in Fig. 2 is one embodiment of an apparatus according to the invention. A distributor duct, i.e. a manifold for distributing fluid to a plurality of cylinders, 10 is mounted on a series of fluid driven cylinders 20. The cylinders 20 are mounted on a hot runner or manifold 30 for distributing molten plastic. The cylinders 20 are mounted in a spaced relationship on the hot runner 30 via spacers 40 so as to provide a means by which the head ends 50, Figs. 2, 4, 6 of valve pins 60 may be readily accessible to user for replacement of pins 60. The pin heads 50 are interconnected to the stems 70 of the cylinder pistons 80 at a position external to the bores 90 of the cylinders 20 thus enabling the heads 50 of the pins 60 to he readily connected to and disconnected from the piston stems 70. Contact and thermal conduction between the manifold 30 (and its associated plates 31 and bushings 32) and the cylinder housings 21 is also minimized, Fig. 2, by the spacing between cylinders 20 and manifold 30.

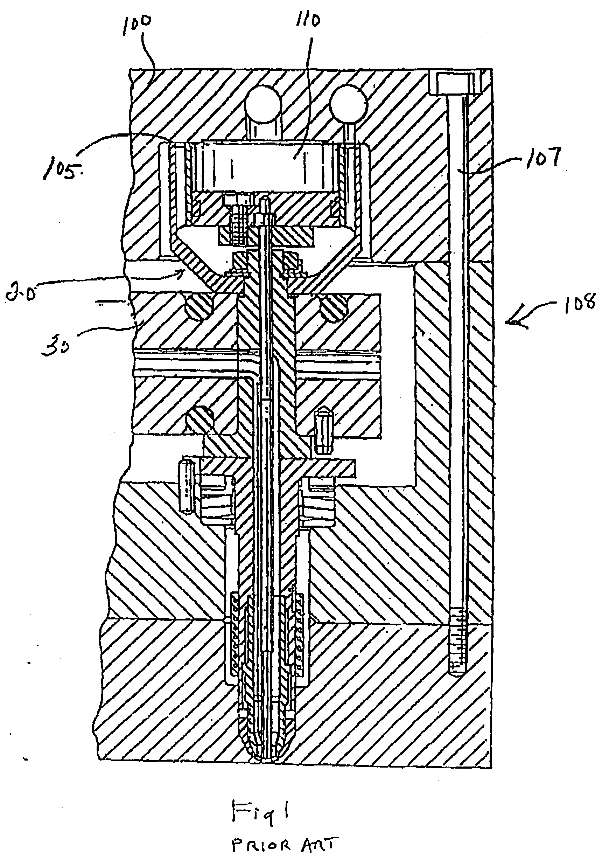

As shown in Fig. 2, a plurality of cylinders 20 are provided with fluid, typically air (pneumatic) or oil (hydraulic) by the distributor duct or fluid delivery manifold. Each cylinder 20 has a piston 80 mounted within a self-contained, fluid sealed housing 21, Figs. 2, 5, 6. The plurality of cylinders 20 are commonly provided with fluid input/output by duct or manifold 10 unlike state of the art designs, Fig. 1, where a cover plate 100 is precision fit and bolted 107 in highly compressed contact onto a small upper rim surface 105 of a open-top cylinder bore 110. The bolted down plate 110 in effect forms the top portion of the enclosure of the bore 110 and is a structural component of the injection molding machine 108.

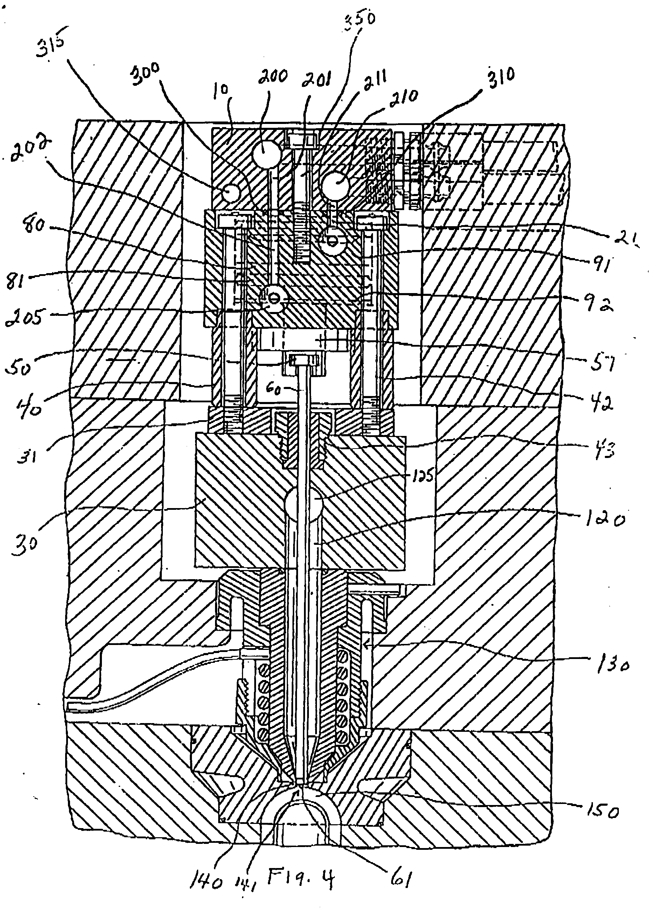

As shown in Figs. 2, 4, the pins 60 extend through a complementary aperture drilled in the body of the hot runner 30 and into, through and along the central axis of the end portions of plastic flow channels 120, the ends of which channels 120 terminate in nozzles 130. The pistons 80 are fluid driven within bores 90 in an up and down reciprocating fashion which in turn causes pins 60 to move up and down in reciprocating fashion. The tip ends 61 of pins 60 have an external surface which is complementary to the tip ends of the output apertures 140 of the channels 120 such that when the tip ends 61 of the pins 60 are in the position shown in Figs. 2, 4, the nozzle output apertures 140 are closed off and plastic flow into mold cavities 150 is prevented. Conversely, when the 60 are retracted upwardly, the tip end apertures 140 are opened and plastic melt may flow into the cavities 150. As can be readily imagined, a common distributor channel 125 distribute plastic melt flow to each end portion channel 120 which is/are aligned with a separate gate opening 141 to a separate mold cavity 150.

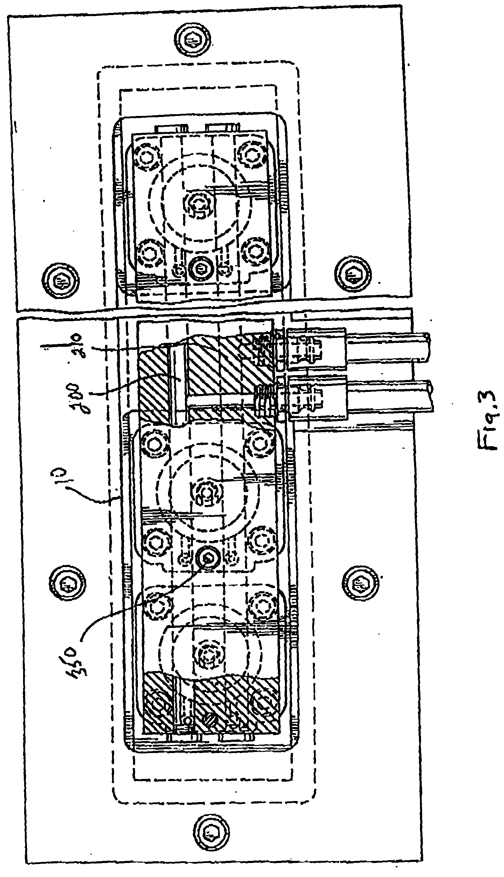

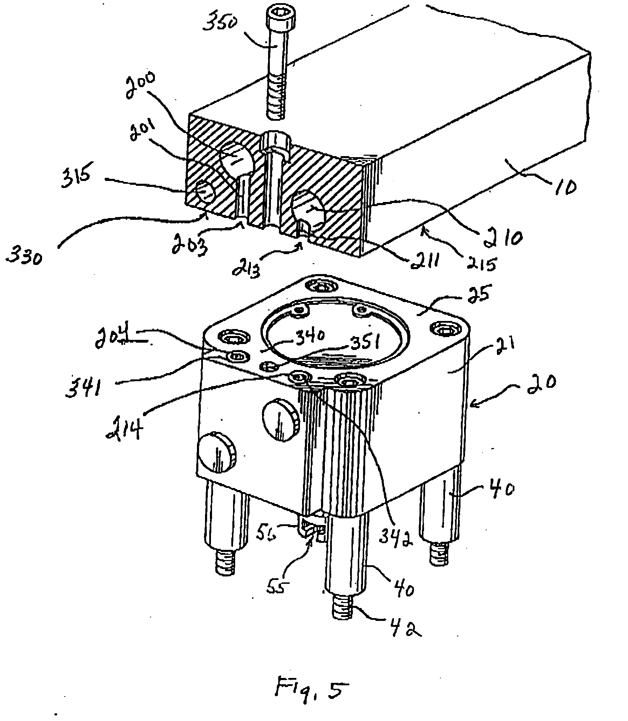

As shown in Figs. 3, 4, 5, a distributor duct 10 according to the invention has at least two fluid sealed distributor channels 200, 210. One channel 200 salably communicates with the lower portion 92 of a cylinder bore 90 via the mating of the end 203 of feed bore 201 with the end 204 of a feed bore 202 in the cylinder housing which communicates at an end 205 thereof with the lower end 92 of the man cylinder bore 90. Similarly, the other duct channel 210 salably communicates with the upper portion 91 of cylinder bore 90 via the mating of the end 213 of a feed bore 211 with the end 214 of a feed bore 212 in the cylinder housing, Figs 4, 5. The mating of the bore ends 203/204 and 213/214 in a fluid sealed fashion is preferably effected by use of a compressible washer or O-ring 300, 310, Fig 4, which is seated between the undersurface 330 of duct 10 and the upper surface 340 of cylinder housing 21. As shown in Fig. 5, a small well 341, 342 around the bore ends 204, 214 may be provided for more conveniently seating the compressible washers, O-rings or the like in proper place around the feed bore ends 204, 214 prior to mounting of the manifold 10 on the cylinders 20. As best shown in Figs,. 3-6, the duct 10 is connected to the cylinder housing 21 via bolts 350 which are screwable into complementary threaded apertures 351 such that the degree of compression exerted on O-rings 300, 310 may be controlled and varied as desired. O-rings 300, 310 may comprise any fluid inert, compressible polymeric material such as a high temperature resistant, compressible rubber, plastic or elastomeric material typically a material such as Viton®. The use of an O-ring, washer or the like which is compressible enables the duct 10, 400, to be constructed such that the drilling, dimensioning and disposition of various components such as the feed bores 201, 211, Figs. 3, 5 (or extension bores 403, 411, Fig. 6) and the alignment of the bores 201, 211 with bores 202, 212 need not be so very highly precise (as is required in the prior art) so as to effect a fluid sealed mating or communication between the duct channels 200, 210, 410, 420 and the upper 91 and lower 92 cavities of cylinder bore 90.

As shown in Figs. 1-7, the manifold 10, 400 is readily attachable to and detachable from the cylinders 20 via bolts 350 as a structure independent of the cylinders 20. The manifold 10, 400 may be readily constructed independent of the cylinders without regard to providing very highly precise mating of surfaces or alignment of bore ends which function together with other surfaces on the cylinders. The compressible nature of the materials of which the O-rings, washers or the like 300, 310 are comprised, enables the channels 200, 210 to be readily connected to the cylinders 90 in a sealed fashion around a relatively widened surface area around the feed bore ends 203, 204, 213, 214, Fig. 5 without the necessity for highly precise alignment. The elastomeric material of which the seals 300, 310 are comprised also provides a better fluid sealing function than metal to metal contact as is required in the prior art.

As shown in Fig. 5, the end 56 of the stem 70 the piston 80, Fig. 2, is provided with a slot 55 into and out of which the head end 50 of the pin 60 is readily slidable. As shown, the cylinders 20 are boltable onto the top of the manifolds 30 via bolts 42, Figs. 4, 5. The bolts 42 are readily connectable to and disconnectable from mounting plate 31 which is bolted to the top of manifold 30 via bushing 43. The ready detachability of cylinders 20 from the top of manifold 30 thus enables the user to readily replace pins 60 when needed.

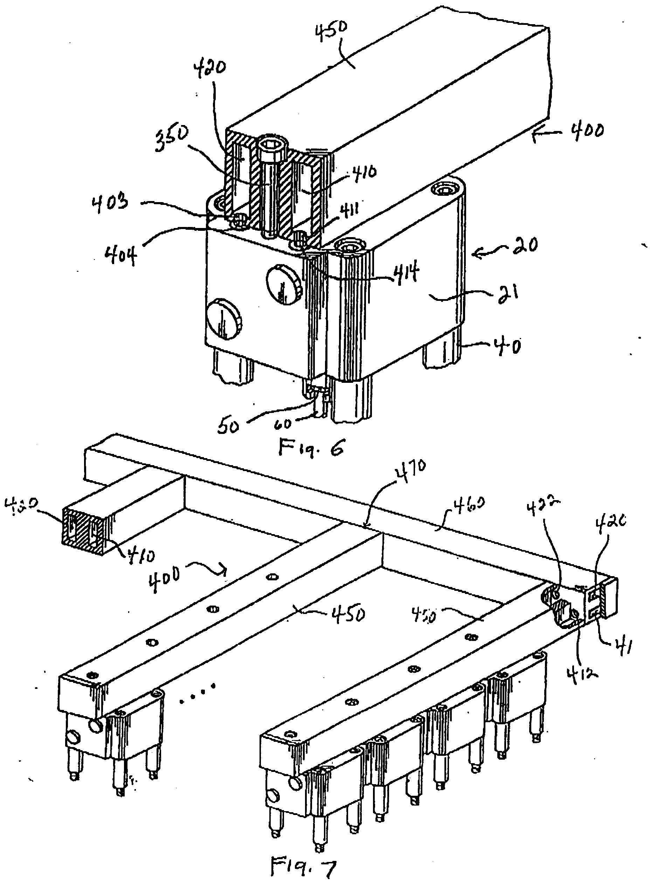

Figs. 6, 7 show a distribution duct 400 for distributing fluid to the cylinders in a modular configuration. As shown, the duct 400 may be constructed as an assembly of leg components 450 which are each scalably connected to a manifold component 460. Depending on the size, configuration and structure of the particular hot runner 30, which may vary in any given injection molding machine, the duct 400 may be constructed to include any selected number of legs 450 as may be required to complement the variable size/configuration of the hot runner 30. Similar to the embodiments described with reference to Figs. 2-5, the legs 450 and manifold component 460 have at least two channels 410, 420 for input/output of fluid to each of the upper and lower 91, 92 chambers of the piston bores 90 of each cylinder 90. As can be readily imagined the piston legs 450 are connectable to the manifold component 460 at fluid sealed joint 470 in a conventional manner, e.g. via a gasket or washer; and the channels 410, 420 in manifold component 460 communicate with the channels 410, 420 in the legs via ports 412, 422 which may selectively be drilled into component 460 to connect a leg 450 along the length of component 460 as needed to confirm to any particular hot runner 30.

As shown in Figs. 4, 5 the duct 10 can be provided with one or more additional channel 315 which extend a substantial portion along the length of the manifold 30. A coolant fluid may be input into, or pumped through channel 315 for purposes of cooling the duct 30.

In the normal course of usage of an injection molding machine, the plastic flow distribution manifold 30 and other components are heated to high temperatures, e.g. 300°F to 800°F, in order to melt the plastic and maintain flow up to the gate 141, Fig. 2, to the mold cavity 150. The heat generated in the manifold 30 will conduct to the cylinders 20 which can be damaged by such heat, in particular the central gasket or O-ring 81 which maintains a fluid seal between the upper and lower chambers 91, 92 of the cylinder bore 90. Unlike the prior art, the duct 10,400 acts as a heat sink for the cylinders 20 by virtue of the widened surface area of contact which is provided between the duct 10, 400 and the surface 25 of the cylinder housing 21. As shown, a widened area of contact between the undersurface 215, Fig. 5, of duct 10 (or 400D, Figs. 6, 7) and the mating surface 25 of a cylinder 20, Fig. 5 is effected upon assembly via bolt 350. Such widened surface area contact is typically at least about one square centimeter, and typically ranges between about one and about 10 square centimeters. In prior systems such as shown in Fig. 1, the surface area contact 105 is insufficient to serve as a means for conducting a substantial amount of heat from the cylinder 20 to the structural plate 100, the contact area 105 being a narrow disc or circular shape. The mating area of contact between the cylinder surface 25 and the duct undersurface 215 is at least sufficient to enable or allow conduction of a substantial amount of heat from the cylinder housing 21 to the duct 10 (or 400D in the ease of the Figs. 6, 7 embodiment) when the cylinder housing 21 reaches an elevated temperature above room temperature. The duct 10 is comprised of a heat conductive material such as iron, steel, copper, aluminum or other heat conductive metal material and/or mixtures of all of the foregoing.

As shown in the Figures, the point of connection of the pin head 50 to the piston 80 is at a position at the end of stem 57, Fig. 4, which is external to the cylinder bore 90 and always remains external to the cylinder bore 90 before, during and after up and down movement of the piston 80. Corrosive gases, heat and other materials which are external to the cylinder bore 90 thus cannot invade the cylinder bore 90 through an aperture, slot or the like by which the pin 60 is connected to the piston 80. And, the external pin/piston connection obviates the necessity for disassembling the cylinder 20 in order to replace a pin 60.

It will now be apparent to those skilled in the art that other embodiments, improvements, details and uses can be made consistent with the letter and spirit of the foregoing disclosure and within the scope of this patent, which is limited only by the following claims, construed in accordance with patent law, including the doctrine of equivalents.

## Claims

1. In an injection molding machine, a distributor duct apparatus for delivering a selected fluid to two or more separate, fluid driven cylinders each of which is mounted on a heated manifold and is interconnected to a valve pin for effecting reciprocal movement of the valve pin wherein the reciprocal movement of the valve pin controls the flow of molten plastic being delivered through a nozzle which delivers molten plastic to a gate of a mold, the distributor duct apparatus comprising:
a distributor housing mounted on a outside surface of each of the cylinders, each of the cylinders having a piston slidably mounted within the bore of an enclosed cylinder housing for reciprocal fluid driven movement of the piston within the bore of the cylinder housing;
the distributor housing having at least two fluid flow channels, one channel sealably communicating with a first fluid input/output port to the bore of each cylinder housing and another channel sealably communicating with a second fluid input/output port to the bore of each cylinder housing.

2. The apparatus of claim 1 including a compressible member sandwiched between each channel and each fluid input/output port such that the communication between each channel and each fluid input/output port is fluid sealed.

3. The apparatus of claim 1 wherein each cylinder has a selected widened external mounting surface and the distributor duct housing has complementary selected widened external surface areas for mating with the selected mounting surfaces of the cylinders.

4. The apparatus of claim 1 wherein the distributor housing is readily attachable to and detachable from each of the cylinders.

5. The apparatus of claim 1 wherein the cylinders are mounted a spaced distance on and from an external surface of the heated manifold.

6. The apparatus of claim 1 wherein the cylinders are interconnected to the valve pins at a position external to the bores of the enclosed cylinder housings.

7. In an injection molding machine, an apparatus for effecting reciprocal movement of valve pins which control molten plastic flow to a mold, the apparatus comprising:
at least two cylinders mounted on a heated manifold or distributing the flow of molten plastic to the molds, each cylinder having a piston slidably mounted within a bore of an enclosed cylinder housing for reciprocal fluid driven movement of the piston within the bore of the cylinder housing, each piston being interconnected to a valve pin;
a fluid scaled distributor housing mounted on an outside surface of each of the cylinders, the distributor housing having at least two fluid flow channels, one channel sealably communicating with a first fluid input/output port to the bore of each cylinder housing and another channel sealably communicating with a second fluid input/output port to the bore of each cylinder housing.

8. The apparatus of claim 7 including a compressible member sandwiched between each channel and each fluid input/output port such that the communication between each channel and each fluid input/output port is fluid sealed.

9. The apparatus of claim 7 wherein each cylinder has a selected widened external mounting surface and the distributor duct housing has complementary selected widened external surface areas for mating with the selected mounting surfaces of the cylinders.

10. The apparatus of claim 7 wherein the distributor housing is readily attachable to and detachable from the cylinders.

11. The apparatus of claim 7 wherein the cylinders are mounted on and spaced a selected distance from an external surface of the heated manifold.

12. The apparatus of claim 7 wherein the pistons of the cylinders are interconnected to the valve pins at a position external to the bores of the cylinder housings.

13. The apparatus of claim 9 wherein the distributor housing comprises a heat conductive material, the distributor duct housing being mounted on the cylinders such that the selected widened mounting surfaces of the cylinders are mated in compressed contact with the complementary selected widened surface areas of the distributor housing, heat being readily conductible from the cylinders to the distributor duct housing through the mated surfaces.
